# EUROPEAN PATENT APPLICATION

(11) **EP 3 796 547 A1**
(43) Date of publication of application: **24.03.2021**
(21) Application number: 19803027.2
(22) Date of filing: 19.04.2019
(51) Int. Cl.: H02P 29/00

(54) **MOTOR CONTROL DEVICE**

(30) Priority: 14.05.2018 JP 2018093170
(71) Applicant: OMRON CORPORATION, Kyoto-shi, Kyoto 600-8530 (JP)
(72) Inventor: KIRIBUCHI, Takeshi, Kizugawa-shi, Kyoto 619-0283 (JP); SAWA, Kazuya, Kizugawa-shi, Kyoto 619-0283 (JP)
(74) Representative: Becker, Eberhard
(86) International application number: PCT/JP2019/016745
(87) International publication number: WO 2019/220860

(57) **Abstract**

The present invention obtains a motor control device usable regardless of a communication system adopted in a master device. A slave device (90) is provided with: a network communication unit (120) including a reconfigurable device and communicating with a PLC (100), that is a higher-level device, via a communication network; and a recognition unit (140) for recognizing, from information of the PLC (100), a communication system that is adopted by the PLC (100) to communicate with the network communication unit (120). When the communication system recognized by the recognition unit (140) is different from a communication system with which the reconfigurable device of the network communication unit (120) is currently compatible, the network communication unit (120) reconfigures the reconfigurable device so that communication is possible using the communication system recognized by the recognition unit (140).

## Description

### BACKGROUND

### Technical Field

An aspect of the invention relates to a motor control device for controlling a motor.

### Description of Related Art

In industrial systems, such as factory automation (FA) systems, various proposals have been made for setting the operation conditions among the respective machines. For example, Patent Document 1 discloses a technology for changing the communication system of a communication processing device in correspondence with a command of a higher-level device.

### [Prior Art Document]

### [Patent document]

Patent Document 1: Japanese Laid-Open No. 2017-69777.

### SUMMARY

### [Problems to be Solved by the Invention]

In an FA system, the higher-level device transmits a command to a lower-level device and exerts various control on the lower-level device. For example, a master device as the high-level device causes a motor control device as a kind of the lower-level device to control a motor by transmitting a command relating to motor control with respect to the motor control device.

Meanwhile, a communication unit of the conventional motor control device is only compatible with one communication system set in advance. Therefore, for example, in the case where the master device is changed to a master device adopting a different communication system, it is necessary to change all the motor control devices or disposing additional communication units to all the motor control devices, which is labor and money consuming.

In view of the above issue, the objective of the invention is to obtain a motor control device usable regardless of the communication system adopted in the mater device.

### [Means for Solving the Problems]

To solve the above issue, a motor control device according to an aspect of the invention is a motor control device for controlling a motor. The motor control device includes: a network communication unit, including a reconfigurable device that is a reconfigurable programmable logic device and communicating with a master device, which is a higher-level device with respect to the motor control device, via a communication network; and a recognition unit, recognizing a communication system adopted by the master device in a communication with the network communication unit from information transmitted from the master device to the network communication unit. In a case where the communication system recognized by the recognition unit is different from a currently compatible communication system in the reconfigurable device, the network communication unit reconfigures the reconfigurable device so that the communication is possible by using the communication system recognized by the recognition unit.

### [Inventive Effects]

According to an aspect of the invention, the motor control device usable regardless of the communication system adopted in the master device can be obtained.

### BRIEF DESCRIPTION OF THE DRAWINGS

FIG. 1 is a diagram illustrating an example of a configuration of main parts of an FA system according to Embodiment 1.
FIG. 2 is a functional block diagram schematically illustrating the whole configuration of the FA system of FIG. 1.
FIG. 3 is a diagram illustrating an example of a circuit configuration of a power to a motor in a slave device of FIG. 1.

### DESCRIPTION OF THE EMBODIMENTS

### [Embodiment 1]

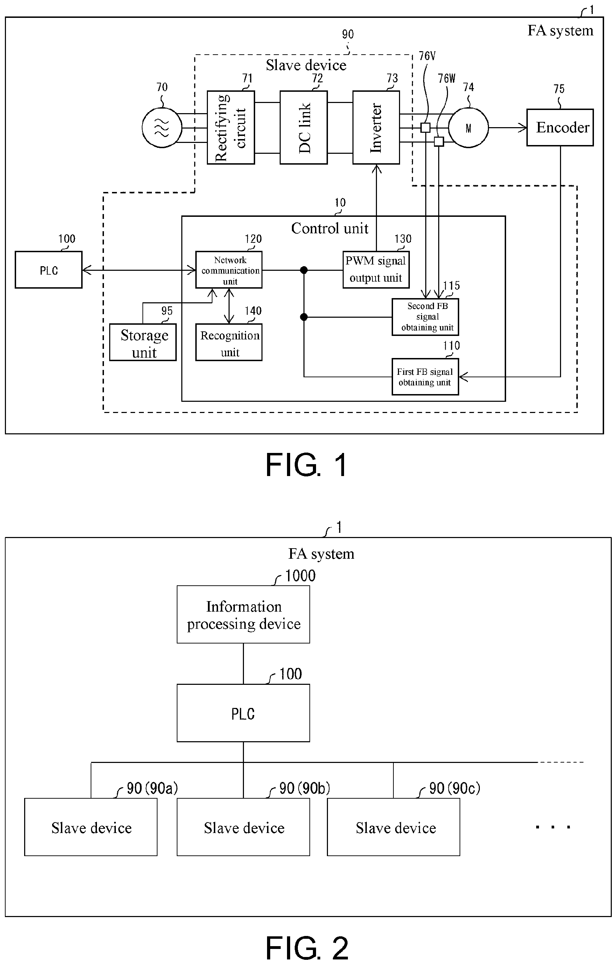

In the following, an embodiment (referred to as "the embodiment" in the following) according to an aspect of the invention is described based on FIGs. 1 to 3. An FA system according to the embodiment at least includes a higher-level device (master device) that transmits a command for motor control to a lower-level device; the lower-level device (motor control device) that receives the command from the higher-level device to control a motor; and the motor controlled by the lower-level device. To begin with, specific examples for which the invention is suitable are briefly described with reference to FIG. 1.

### §1 Applicable Example

FIG. 1 is a diagram illustrating an example of a configuration of main parts of an FA system (motor control system) 1 according to the embodiment (referred to as "Embodiment 1" in the following). The FA system 1 shown in FIG. 1 mainly includes a programmable logic controller (PLC) 100, which is a higher-level device, a slave device 90, which is a lower-level device, and a motor 74.

The slave device 90 receives a command relating to motor control from the PLC 100, and controls the motor 74 according to the command. Depending on the specification thereof, the communication system which the PLC 100 adopts as the communication system with the slave device 90 (which will be briefly described as "communication system of the PLC100" in the following) differs. The "communication system" in the embodiment refers to a collection of various communication standards between the PLC 100 and the slave device 90 defined by a group of communication protocols corresponding to the respective data layers, such as EtherCAT (i.e.,Ethernet (registered trademark) for Control Automation Technology) (registered trademark), PROFINET (registered trademark), SERCOS (registered trademark) III, Powerlink, and MECHATROLINK (registered trademark), etc.

The slave device 90 of the embodiment includes a recognition unit 140 and a network communication unit 120, so as to carry out a communication according to the communication system of the PLC 100. The recognition unit 140 automatically recognizes the communication system of the PLC 100. The method for automatic recognition will be described in the following. The network communication unit 120 includes a reconfigurable device which is a reconfigurable (rewritable) programmable logic device (PLD).

In the case where the communication system recognized by the recognition unit 140 is different from the currently compatible communication system in the reconfigurable device of its own, the network communication unit 120 reconfigures the reconfigurable device so that the communication is possible by using the communication system recognized by the recognition unit 140. Accordingly, the network communication unit 120 can communicate with the PLC 100 by using the communication system of the PLC 100.

According to the configuration, the slave device 90 can automatically recognize the communication system of the PLC 100 as a communication partner and reconfigure the reconfigurable device of the network communication unit 120 when necessary.

The conventional slave device is a device in which one communication system is set in advance. Therefore, it is necessary to prepare a slave device corresponding to the communication system adopted in the PLC which the user uses or to dispose an additional communication unit in the slave device. Meanwhile, the slave device 90 according to the embodiment can automatically recognize the communication system suitable for the communication with the PLC 100 and carry out the communication by using the suitable communication system. Therefore, the slave device 90 can be used regardless of the communication system of the PLC 100.

### §2 Configuration Example

### (Outline of FA System 1)

FIG. 2 is a functional block diagram schematically illustrating the whole configuration of the FA system 1. The FA system 1 includes an information processing device 1000, the PLC 100, and the slave device 90. The FA system 1 is a unit in which a production facility including a plurality of machines disposed in a factory is put together for each function. The FA system 1 is a system for realizing automation of manufacturing processes in a factory. The FA system 1 is realized by a master-slave control system.

In the FA system 1, the PLC (master device) 100 may also be referred to as a network master. Correspondingly, the slave device 90 may also be referred to as a network slave. The PLC 100 controls one or more slave devices 90.

The information processing device 1000 comprehensively controls the respective units of the FA system 1. The information processing device 1000 may control the PLC 100. The PLC 100 can output data to the respective slave devices 90. In addition, the PLC 100 can obtain data of the respective slave devices 90. An industrial PC platform (IPC) may be used as the information processing device 1000 or the PLC 100.

The slave devices 90 are respectively connected with the information processing device 1000 via the PLC 100. The slave device 90 executes one or more functions relating to the manufacturing processes in accordance with the command of the PLC 100. For the ease of description, the three slave devices 90 shown in FIG. 2 are respectively referred to as slave devices 90a to 90c. The information processing device 1000 may control the slave devices 90a to 90c via the PLC 100. The slave devices 90a to 90c carry out communication via the PLC 100. While FIG. 2 illustrates a case where there are multiple slave devices 90, there may also be one (single) slave device 90.

### (Example of Circuit Configuration)

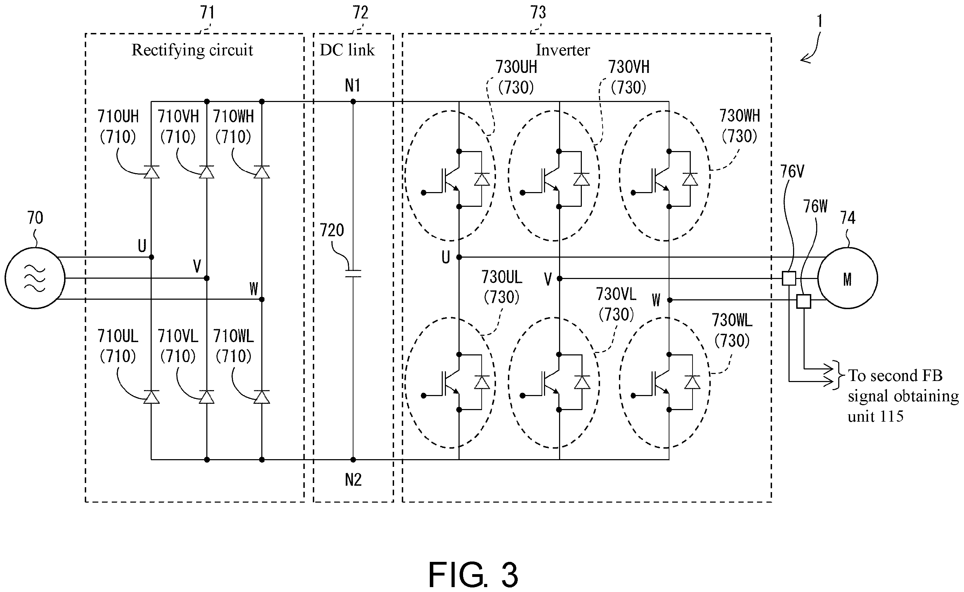

FIG. 3 is a diagram illustrating an example of a circuit configuration of a power 70 to a motor 74 in the FA system 1. The slave device 90 includes a rectifying circuit 71, a direct current (DC) link 72, and an inverter (power conversion unit) 73. The control unit 10 outputs a motor driving signal (e.g., a pulse width modulation (PWM) signal) for the inverter 73 to drive the motor 74 to the inverter 73. The inverter 73 drives the motor 74 based on the PWM signal. Accordingly, the control unit 10 controls (drives) the motor 74 via the inverter 73.

In the following, a case where the motor 74 is a three-phase alternative current (AC) induction motor (IM) is described. However, the motor 74 may also be a three-phase AC synchronous motor (SM). Alternatively, the motor 74 may also be a single-phase or two-phase AC motor. In addition, as the motor 74, a DC motor can also be used.

The power 70 is a conventional three-phase AC power. In the following, the respective phases of the three-phase AC are represented as the U-phase, the V-phase, and the W-phase. The power 70 is connected to the rectifying circuit 71. The rectifying circuit 71 has six rectifying elements 710. As an example, the rectifying element 710 is a diode. The rectifying circuit 71 converts an AC voltage into a DC voltage (DC power) by rectifying the AC voltage (AC power) supplied from the power 70. The rectifying circuit 71 serves as an AC/DC converter.

The six rectifying elements 710 form a three-phase full-wave rectifying circuit. Among the six rectifying elements 710, (i) two of the rectifying elements 710 are connected to the U-phase of the power 70, (ii) two of the rectifying elements 710 are connected to the V-phase of the power 70, and (iii) two of the rectifying elements 710 are connected to the W-phase of the power 70.

In FIG. 3, the six rectifying elements 710 are respectively referred to as the following:
a rectifying element 710UH (U-phase upper arm rectifying element);
a rectifying element 710UL (U-phase lower arm rectifying element);
a rectifying element 710VH (V-phase upper arm rectifying element);
a rectifying element 710VL (V-phase lower arm rectifying element);
a rectifying element 710WH (W-phase upper arm rectifying element); and
a rectifying element 710WL (W-phase lower arm rectifying element).

Also, a "upper arm rectifying element" generally refers to the rectifying element 710 connected to a node N1 of the DC link 72 (a capacitor 720). Besides, a "lower arm rectifying element" generally refers to the rectifying element 710 connected to a node N2 of the DC link 72. The implication of "upper arm" and "lower arm" is the same as the inverter 73 described in the following.

The rectifying circuit 71 is connected with the inverter 73 via the DC link 72. The DC link 72 includes the capacitor 720. One of the two nodes of the capacitor 720 is referred to as N1, while the other is referred to as N2. The capacitor 720 smooths the DC voltage supplied from the rectifying circuit 71. In the circuit configuration of FIG. 3, (i) the node N1 is equivalent to the positive electrode of the capacitor 720, and (ii) the node N2 is equivalent to the negative electrode of the capacitor 720. The DC link 72 may also be referred to as a smoothing circuit.

The inverter 73 has six switching elements 730. In Embodiment 1, the case where the inverter 73 is a voltage-type inverter is described. However, a current-type inverter may also be used as the inverter 73. The inverter 73 converts the DC voltage into the AC voltage (AC power) by switching the DC voltage (DC power) supplied from the DC link. The inverter 73 serves as a DC/AC converter.

The switching element 730 is formed by connecting an insulated gate bipolar transistor (IGBT) and a diode (reflux diode) in parallel. Among the six switching elements 730, (i) two of the switching elements 730 are connected to the U-phase of the motor 74, (ii) two of the switching elements 730 are connected to the V-phase of the motor 74, and (iii) two of the switching elements 730 are connected to the W-phase of the motor 74. More specifically, "U-phase of the motor 74" refers to "U-phase of a stator coil of the motor 74". The same applies to the V-phase and the W-phase.

In FIG. 3, the six switching elements 730 are respectively referred to as the following:
a switching element 730UH (U-phase upper arm switching element);
a switching element 730UL (U-phase low arm switching element);
a switching element 730VH (V-phase upper arm switching element);
a switching element 730VL (V-phase lower arm switching element);
a switching element 730WH (W-phase upper arm switching element); and
a switching element 730WL (W-phase lower arm switching element); and

The inverter 73 supplies the converted voltage (AC voltage) to the motor 74. By disposing the inverter 73, a three-phase AC voltage with a desired waveform (e.g., a three-phase AC voltage having a desired frequency and a desired amplitude) can be supplied to the motor 74. Accordingly, the operation of the motor 74 can be controlled by respectively controlling the operation of the inverter 73 (ON/OFF of the six switching elements 730). That is, the motor 74 can be driven according to a desired operation condition. In Embodiment 1, the motor 74 is driven under PWM control.

### (Example of Control Method of Motor 74)

An example of the control method of the motor 74 is described with reference to FIG. 1. The control unit 10 comprehensively control the slave devices 90. The control unit 10 includes a first feedback signal obtaining unit (first FB signal obtaining unit, feedback signal obtaining unit) 110, a second feedback signal obtaining unit (second FB signal obtaining unit, feedback signal obtaining unit) 115, the network communication unit 120, a PWM signal output unit (motor driving signal output unit) 130, and the recognition unit 140.

The first FB signal obtaining unit 110 and the second FB signal obtaining unit 115 are generally referred to as the feedback signal obtaining unit (FB signal obtaining unit). In other words, in Embodiment 1, the FB signal obtaining unit is exemplified as including the first FB signal obtaining unit 110 and the second FB signal obtaining unit 115. The FB signal obtaining unit obtains a feedback signal (FB signal) indicating a predetermined physical quantity corresponding to an operation state of the motor 74. The PWM signal output unit 130 outputs a PWM signal (motor driving signal) to the inverter 73.

In Embodiment 1, the FB signal obtaining unit is exemplified as including the first FB signal obtaining unit 110 and the second FB signal obtaining unit 115. That is, in Embodiment 1, the case where the first FB signal obtaining unit 110 and the second FB signal obtaining unit 115 are used to perform feedback control of the motor 74 is described. Therefore, the FB signal includes the first FB signal and the second FB signal to be described afterwards. However, the FB signal obtaining unit may also be configured as including only one of the first FB signal obtaining unit 110 and the second FB signal obtaining unit 115. That is, the FB signal may also be only one of the first FB signal and the second FB signal.

The FA system 1 further includes an encoder 75 (position detection unit) that detects the position of the rotor of the motor 74. The encoder 75 is disposed in (e.g., attached to) the motor 74. The encoder 75 is, for example, a rotary encoder. The encoder 75 detects the position of the rotor of the motor 74 (more specifically, the rotation angle of the motor 74, which is referred to as θm in the following). More specifically, "rotation angle of the motor 74" refers to "rotation angle of the rotor of the motor 74". θm is an example of the predetermined physical quantity corresponding to the operation state of the motor 74. The encoder 75 outputs a signal indicating θm (referred to as "angle detection signal" in the following). The angle detection signal is, for example, a serial data signal (digital data). Accordingly, the encoder 75 outputs the angle detection signal as a signal representing numerical data.

The first FB signal obtaining unit 110 obtains the angle detection signal, as the first feedback signal (first FB signal), from the encoder 75. Specifically, the first FB signal obtaining unit 110 obtains the first FB signal (angle detection signal) from the encoder 75 every predetermined period (communication period). The first FB signal obtaining unit 110 is used for position feedback, for example.

The first FB signal obtaining unit 110 performs communication (data reception) with the encoder 75 according to a conventional serial communication system. Examples of the conventional serial communication system include RS422 or RS485. In the configuration, the first FB signal obtaining unit 110 performs a digital process for obtaining the first FB signal.

The FA system 1 further includes current detectors 76V and 76W. The second FB signal obtaining unit 115 obtains a signal (referred to as current detection signal in the following) that indicates the current supplied from the inverter 73 to the motor 74 via the current detectors 76V and 76W. The current is another example of the predetermined physical quantity corresponding to the operation state of the motor 74. For example, the second FB signal obtaining unit 115 detects the current supplied from the inverter 73 to two predetermined phases (e.g., V-phase and W-phase) of the motor 74 via the current detectors 76V and 76W (see FIGs. 1 and 3).

As an example, the current detectors 76V and 76W may be the conventional analog current detectors. The current detector 76V detects the current supplied from the inverter 73 to the V-phase of the motor 74. The current detector 76W detects the current supplied from the inverter 73 to the W-phase of the motor 74. The current detectors 76V and 76W output their detection results as current detection signals. In this case, the current detection signals are analog signals (analog data).

As an example, the second FB signal obtaining unit 115 is formed by a delta-sigma type analog-digital (AD) converter. The second FB signal obtaining unit 115 converts the current detection signal, which is an analog signal and obtained from the current detectors 76V and 76W, into digital signals (digital data). The second FB signal obtaining unit 115 obtains the converted current detection signal as the second feedback signal (second FB signal) that corresponds to the torque value of the motor 74. However, the second FB signal obtaining unit 115 may also be configured by a conventional AD converter which does not adopt the delta-sigma type.

As another example, the current detectors 76V and 76W may also be conventional digital-type current detectors. In this case, the current detection signal is, for example, a serial data signal (digital data). In this case, the second FB signal obtaining unit 115 obtains the current detection signal, as the second FB signal, from the current detectors 76V and 76W. The second FB signal obtaining unit 115 performs communication (data reception) with the current detectors 76V and 76W according to a conventional serial communication system. Accordingly, the second FB signal may also be supplied to the second FB signal obtaining unit 115 via serial communication. In this case, the second FB signal obtaining unit 115 does not require the AD converting function. Therefore, the configuration of the second FB signal obtaining unit can be simplified.

The first FB signal obtaining unit 110 is connected to the network communication unit 120 and the PWM signal output unit 130. The first FB signal obtaining unit 110 can supply the first FB signal to at least one of the network communication unit 120 and the PWM signal output unit 130. Similarly, the second FB signal obtaining unit 115 is connected to the network communication unit 120 and the PWM signal output unit 130. The second FB signal obtaining unit 115 can supply the second FB signal to at least one of the network communication unit 120 and the PWM signal output unit 130. Accordingly, the FB signal obtaining unit can supply the FB signal to at least one of the network communication unit 120 and the PWM signal output unit 130.

The network communication unit 120 is a communication interface between the slave device 90 and the PLC 100. Examples of the communication system between the slave device and the PLC 100 include EtherCAT, PROFINET, SERCOS III, and Powerlink, etc. The communication system between the slave device 90 and the PLC 100 is not particularly limited as long as it is a conventional communication system based on the field network.

In the case where the communication system (that is, the communication system of the PLC 100) recognized by the recognition unit 140 is different from the currently compatible communication system in the reconfigurable device of its own, the network communication unit 120 reconfigures the reconfigurable device so that communication is possible by using the communication system recognized by the recognition unit 140.

Examples of the reconfigurable device include field programmable gate arrays (FPGAs). In Embodiment 1, the case where the network communication unit 120 is configured by using an FPGA is described. However, the reconfigurable device applicable for the network communication unit 120 is not limited to FPGA. For example, the network communication unit 120 may also be configured by using a dynamically reconfigurable processor (DRP).

The recognition unit 140 automatically recognizes the communication system adopted by the PLC 100 from the information transmitted from the PLC 100 to the network communication unit 120 by reading at least a portion of the information. With regard the types of the "information", the formats and contents thereof are not particularly limited as long as the recognition unit 140 can recognize the communication system. For example, the information transmitted from the PLC 100 may be any command, various data, data groups, or data block groups that circulate in the communication network of the field network.

More specifically, the recognition unit 140 reads an identifier (simply referred to as "identifier" in the following) included in the information which the network communication unit 120 receives from the PLC 100 and indicating the communication protocol type. In addition, the recognition unit 140 recognizes the communication system which the PLC 100 adopts from the communication protocol type indicated by the identifier. The recognition unit 140 transmits the recognized communication system to the network communication unit 120.

The identifier may indicate the communication protocol type of any data layer, if the recognition unit 140 can uniquely specify the communication system of the PLC 100. In addition, by reading one or more identifiers, the recognition unit 140 may specify the communication protocol types of multiple data layers and recognize the communication system of the PLC 100 from the combination of the communication protocol types.

For example, the recognition unit 140 may read the Ethernet frame which the network communication unit 120 receives from the PLC 100 as the identifier. More specifically, the recognition unit 140 may recognize the communication system of the PLC 100 from EtherType recorded in the header part (Ethernet header) of the Ethernet frame. EtherType is an identifier used in the Ethernet and indicating the network layer type.

The PLC 100 generates one or more command signals with respect to the motor 74 (e.g., calculates one or more command values with respect to the motor 74) based on the operation condition of the motor 74 set by the user. As an example, the PLC 100 generates a first command value (e.g., the command value relating to the rotation angle of the motor 74) and a second command value (the command value relating to the current supplied to the motor 74). The PLC 100 uses θm indicated by the first FB signal as the feedback value (first FB value) with respect to the first command value. In addition, the PLC 100 uses the current value indicated by the second FB signal as the feedback value (first FB value) with respect to the second command value.

As an example, the control unit 10 is provided with an FB calculation processing (feedback calculation processing) function. In this case, the control unit 10 obtains the respective command values (first command value and second command value) from the PLC 100 via the network communication unit 120. Then, the control unit 10 performs a control process on the motor 74 (motor control process) based on the comparison results between the respective command values and the respective FB values (e.g., the differences between the respective command values and the respective FB values). That is, the control unit 10 performs an FB calculation process for controlling the motor 74 based on the comparison results. Accordingly, the control unit 10 can perform a motor control process (FB calculation process) based on the respective FB signals. As an example, in Embodiment 1, the control unit 10 supplies the result of the FB calculation process (referred to as "FB calculation process result" in the following) to the PWM signal output unit 130. The PWM signal output unit 130 generates the PWM signal (motor driving signal) based on the FB calculation process result.

The PWM signal is a signal that controls ON/OFF of the respective six switching elements 730 of the inverter 73. The PWM signal can be understood as a signal for driving the motor 74 via the inverter 73. Accordingly, the PWM signal is an example of the motor driving signal (a signal that makes the inverter 73 drive the motor 74). As an example, the PWM signal output unit 130 adjusts a duty ratio (also referred to as "duty cycle") based on the FB calculation process result.

Different from the example above, the FB calculation process may also be performed in the PLC 100. That is, the PLC 100 carries out the substantial motor control. In this case, the network communication unit 120 may supply the first FB signal obtained from the first FB signal obtaining unit 110 to the PLC 100. Also, the network communication unit 120 may supply the second FB signal obtained from the second FB signal obtaining unit 115 to the PLC 100. Furthermore, the network communication unit 120 obtains the FB calculation process result from the PLC 100.

In addition, the slave device 90 includes a storage unit 95. The storage unit 95 stores the setting data of the reconfigurable device of the PLD. The setting data is the data which the network communication unit 120 refers to at the time of reconfiguring the reconfigurable device of its own. The setting data is an example of the communication system information, and one setting data corresponds to one communication system. The setting data is prepared in advance and stored in the storage unit 95. The storage unit 95 stores at least two setting data. The types and the maximum number of the setting data stored in the storage unit 95 are not particularly limited. However, it is desirable that the storage unit 95 stores the setting data so as to cover all the communication systems which the PLC 100 may adopt.

### (Recognition of Communication System and Reconfiguration of Reconfigurable Device)

In the communication using the field network, the format of the data output from the PLC 100 differs as the specification of the PLC 100 differs. Therefore, the types of the communication system between the PLC 100 and the network communication unit 120 differs as the specification of the PLC 100 differs.

As an example, the case where the manufacturer of a PLC (referred to as "type-A PLC" for the ease of description) is different from the manufacturer of another PLC (referred to as "type-B PLC" for the ease of description) is considered. In such scenario, there is a case where the communication system (referred to as "type-A communication system" in the following) between the type-A PLC and the network communication unit 120 is different from the communication system (referred to as "type-B communication system" in the following) between the type-B PLC and the network communication unit 120. For example, while the type-A communication system and the type-B communication system are communication systems based on the field network, there is a case where the communication protocols thereof are different. In the following, as an example with such difference, the case where the type-A communication system is EtherCat and the type-B communication system is MECHATROLINK is described.

Conventionally, it is necessary to prepare a motor control device in which a specific communication system is set in advance in correspondence with the specification of the PLC. For example, in the case where the type-A PLC and the motor control device are used together, it is necessary to prepare a motor control device having a communication unit (referred to as "type-A communication unit" in the following) with which communication is possible by using the type-A communication system. Correspondingly, in the case where the type-B PLC and the motor control device are used together, it is necessary to prepare a motor control device having a communication unit (referred to as "type-B communication unit" in the following) with which communication is possible by using the type-B communication system. Thus, conventionally, to cope with the PLCs with different specifications, it is necessary to prepare multiple motor control devices. As a result, the issue that the inventory management of the motor control device becomes complicated arises.

In addition, conventionally, to cope with PLCs with different specifications by using one motor control device, the motor control device needs to be provided with multiple communication units. As an example, the case where the type-A PLC and the type-B PLC are coped with by using one motor control device is considered. In this case, it is necessary to provide two communication units, i.e., a type-A communication unit and a type-B communication unit, in one motor control device. Accordingly, in the case where the PLCs with different specifications are coped with by using one motor control device, the issue that the configuration of the motor control device becomes complicated arises.

Given the above issues, the inventors of the invention (referred to in the following as "inventors") consider there is still room for improvement in the configuration of improving the convenience of the motor control device. The configuration of the slave device 90 according to Embodiment 1 is an example of a concept newly devised by the inventors.

Specifically, the slave device 90 according to Embodiment 1 is mainly characterized as including the recognition unit 140 and the network communication unit 120. In the following, the processes in the recognition unit 140 and the network communication unit 120 are described in greater detail.

When the PLC 100 is connected with the slave device 90 by using a cable, etc., and the powers of the PLC 100 and the slave device 90 are turned on, the PLC 100 and the slave device 90 start to communicate. Specifically, in order to establish the connection of the PLC 100 with the slave device 90, the PLC 100 transmits the information (e.g., the data block group of the Ethernet frame) to the network communication unit 120 of the slave device 90. The recognition unit 140 monitors the network communication unit 120, and when the network communication unit 120 receives the data block group, the recognition unit 140 reads EthernetType included in the header part (Ethernet Header) of the Ethernet frame. The recognition unit 140 specifies the communication system of the PLC 100 in correspondence with the content of EthernetType that is read.

For example, in the case where EthernetType is 0x88A4, the communication system of the PLC 100 is EtherCat. As another example, in the case where EthernetType is 0x8892, the communication system of the PLC 100 is PROFINET. As another example, in the case where EthernetType is 0x88CD, the communication system of the PLC 100 is SERCOS III. As another example, in the case where EthernetType is 0x88AB, the communication system of the PLC 100 is Powerlink. The recognition unit 140 transmits the recognized communication system to the network communication unit 120.

The network communication unit 120 determines whether the communication system recognized by the recognition unit 140 matches the currently compatible communication system in the reconfigurable device of its own. In the case where the communication system recognized by the recognition unit 140 matches the currently compatible communication system in the reconfigurable device of its own, the network communication unit 120 starts communicating with the PLC 100.

Alternatively, in the case where the communication system recognized by the recognition unit 140 does not match the currently compatible communication system in the reconfigurable device of its own, that is, in the case where the communication system recognized by the recognition unit 140 is different from the currently compatible communication system in the reconfigurable device of its own, the network communication unit 120 reads the setting data corresponding to the communication system recognized by the recognition unit 140 from the storage unit 95. In addition, the network communication unit 120 reconfigures the reconfigurable device of its own based on the setting data that is read. Accordingly, the communication can be carried out by using the communication system recognized by the recognition unit 140.

For example, in the case where the communication system recognized by the recognition unit 140 is EtherCAT, the network communication unit 120 reads the setting data corresponding to EtherCAT from the storage unit 95, and reconfigures the reconfigurable device according to the description of the setting data. Accordingly, the network communication unit 120 can cope with the communication using EtherCAT. As another example, in the case where the communication system recognized by the recognition unit 140 is PROFINET, the network communication unit 120 reads the setting data corresponding to PROFINET from the storage unit 95, and reconfigures the reconfigurable device according to the description of the setting data. Accordingly, the network communication unit 120 can cope with the communication using PROFINET. By reconfiguring the reconfigurable device by using the network communication unit 120, the network communication unit 120 can carry out communication according to various communication systems of the PLC 100.

In addition, the slave device 90 prepares the setting data in advance and stores the setting data in the storage unit 95, and reconfigures the reconfigurable device according to the description of the setting data. Accordingly, even in the case where the reconfiguration of the reconfigurable device in the network communication unit 120 is a significant reconfiguration or a reconfiguration through a complicated order of processes, the reconfigurable device can be reconfigured quickly and reliably.

The timing at which the recognition unit 140 recognizes the communication system is not limited to the above example. For example, the recognition unit 140 may also monitor whether the communication of the network communication unit 120 is carried out normally or not, and in the case where the communication of the network communication unit 120 is not carried out normally (that is, in the case where a communication error occurs), the recognition unit 140 may specify and recognize the communication system of the PLC 100 by reading EthernetType included in the Ethernet header of the latest Ethernet frame received from the PLC 100.

In addition, the storage unit 95 is not required in the slave device 90. For example, in the case where the communication system recognized by the recognition unit 140 is different from the currently compatible communication system in the reconfigurable device of its own, the communication information unit 120 of the slave device 90 may also transmit the information specifying the transmission system recognized by the recognition unit 140 as well as a transmission request which requests transmission of the setting data corresponding to the communication system recognized by the recognition unit 140 to an external device. In addition, the network communication unit 120 may also reconfigure the reconfigurable device by receiving and applying the setting data in correspondence with the communication system recognized by the recognition unit 140 from the external device. Then, the external device may also select and transmit the setting data corresponding to the communication system which the transmission request specifies from the setting data about various communication systems stored in advance in the external device. Alternatively, the external device may also generate the setting data corresponding to the communication system which the transmission request specifies any time and transmit the setting data.

In addition, in the case where the network communication unit 120 can reconfigure the reconfigurable device without using the setting data, the storage unit 95 and the external device are not required. In addition, it is not necessary for the network device to receive the setting data. For example, in the case where the network communication unit 120 can generate data equivalent to the setting data in correspondence with the communication system conveyed from the recognition unit 140, the storage unit 95, the external device, and the setting data are not required.

Accordingly, the slave device 90 can automatically recognize the communication system which the PLC 100 adopts, and provide the network communication unit 120 with the function as the communication unit performing communication by using the communication system which the PLC 100 adopts. That is, without disposing the additional communication unit, one slave device 90 can communicate with the PLCs 100 of various specifications. That is, the slave device 90 is usable regardless of the communication system adopted by the PLC 100.

Accordingly, compared with the case where all the motor control devices are changed when the specification of the PLC 100 is changed, or where the additional communication units are disposed to all the motor control devices, as in the conventional art, the labor and the cost can be reduced. In addition, compared with the conventional art, a complicated structure of the slave device 90 can be avoided.

### [Example of Implementation by Software]

The control block (specifically the control unit 10, the network communication unit 120, and the recognition unit 140) of the slave device 90 may be realized by logic circuits (hardware) formed by integrated circuits (IC chips), etc., or realized by software.

In the latter case, the slave device 90 includes a computer that executes the command of a program which is the software for realizing the respective functions. The computer includes one or more processors, for example, as well as a computer readable recording medium storing the program. In addition, in the computer, with the processor reading the program from the recording medium and executing the program, the objective according to an aspect of the invention is achieved. As the processor, a central processing unit (CPU) can be used. As the recording medium, a "non-transitory tangible medium" such as a read-only memory (ROM), as well as a tape, a disk, a card, a semiconductor memory, a programmable logic circuit, or the like can be used. In addition, a random access memory (RAM), etc., that develops the program may also be further included. In addition, the program may also be supplied to the computer via any transmission medium (communication network, broadcast waves, etc.) capable of transmitting the program. An aspect of the invention may also be realized in the form of data signals embedded in a carrier wave, in which the program is realized through electronic transmission.

A motor control device according to an aspect of the invention is a motor control device for controlling a motor. The motor control device includes: a network communication unit, including a reconfigurable device that is a reconfigurable programmable logic device and communicating with a master device, which is a higher-level device with respect to the motor control device, via a communication network; and a recognition unit, recognizing a communication system adopted by the master device in a communication with the network communication unit from information transmitted from the master device to the network communication unit. In a case where the communication system recognized by the recognition unit is different from a currently compatible communication system in the reconfigurable device, the network communication unit reconfigures the reconfigurable device so that the communication is possible by using the communication system recognized by the recognition unit.

According to the configuration, the motor control device can recognize the communication system adopted by the master device by itself, and reconfigure the reconfigurable device in the network communication unit so that the communication is possible by using the recognized communication system. That is, the motor control device according to an aspect of the invention does not have the additional communication unit, and can communicate with the master devices of various communication systems by using one device. That is, the motor control device is usable regardless of the communication system adopted in the master device.

The information may include one or more identifiers indicating a communication protocol type. In addition, the recognition unit of the motor control device may recognize the communication system adopted by the master device in the communication with the network communication unit based on the identifier.

According to the configuration, the motor control device can more accurately recognize the communication system between the master device and the network communication unit.

The identifier may be an identifier indicating a network layer type and included in a header part of an internet protocol in the information transmitted from the master device to the network communication unit.

According to the configuration, the motor control device can more accurately recognize the communication system between the master device and the network communication unit.

The motor control device may include a storage unit storing setting data of the reconfigurable device. In the case where the communication system recognized by the recognition unit is different from the currently compatible communication system in the reconfigurable device of its own, the network communication unit may reconfigure the reconfigurable device by reading and applying the setting data corresponding to the communication system recognized by the recognition unit from the storage unit.

According to the configuration, even in the case where the reconfiguration of the reconfigurable device of the programmable logic device is a complicated order of processes, the reconfigurable device can still be quickly and reliably reconfigured.

In the case where the communication system recognized by the recognition unit is different from the currently compatible communication system in the reconfigurable device of its own, the network communication unit may transmit a transmission request which requests transmission of the setting data corresponding to the communication system recognized by the recognition unit to an external device, and reconfigure the reconfigurable device by receiving and applying the setting data in correspondence with the transmission request from the external device.

According to the configuration, even in the case where the motor control device does not include the storage unit storing the setting data, the reconfigurable device can be reconfigured by using the setting data. Therefore, even in the case where the reconfiguration of the reconfigurable device of the programmable logic device is a complicated order of processes, the reconfigurable device can still be quickly and reliably reconfigured.

### [Appendix]

The aspect of the invention is not limited to the above-described embodiments, and various modifications can be made within the scope of the claims. The embodiments obtained by appropriately combining the technical means disclosed in the different embodiments are also included in the technical scope of the aspect of the invention.

### [Descriptions of Symbols]

1, 2: FA system
74: Motor
90: Slave device (motor control device)
100: PLC (master device)
120: Network communication unit
140: Recognition unit
95: Storage unit

## Claims

1. A motor control device for controlling a motor, the motor control device comprising:
a network communication unit, comprising a reconfigurable device that is a reconfigurable programmable logic device and communicating with a master device, which is a higher-level device with respect to the motor control device, via a communication network; and
a recognition unit, recognizing a communication system adopted by the master device in a communication with the network communication unit from information transmitted from the master device to the network communication unit,
wherein in a case where the communication system recognized by the recognition unit is different from a currently compatible communication system in the reconfigurable device of its own, the network communication unit reconfigures the reconfigurable device so that the communication is possible by using the communication system recognized by the recognition unit.

2. The motor control device as claimed in claim 1, wherein the information comprises one or more identifiers indicating a communication protocol type, and
the recognition unit recognizes the communication system adopted by the master device in the communication with the network communication unit based on the identifier.

3. The motor control device as claimed in claim 2, wherein the identifier is comprised in a header part of the information transmitted from the master device to the network communication unit.

4. The motor control device as claimed in any one of claims 1 to 3, comprising a storage unit storing setting data of the reconfigurable device,
wherein in the case where the communication system recognized by the recognition unit is different from the currently compatible communication system in the reconfigurable device of its own, the network communication unit reconfigures the reconfigurable device by reading and applying the setting data corresponding to the communication system recognized by the recognition unit from the storage unit.

5. The motor control device as claimed in any one of claims 1 to 3, wherein in the case where the communication system recognized by the recognition unit is different from the currently compatible communication system in the reconfigurable device of its own, and
the network communication unit transmits a transmission request which requests transmission of the setting data corresponding to the communication system recognized by the recognition unit to an external device, and reconfigures the reconfigurable device by receiving and applying the setting data in correspondence with the transmission request from the external device.
